# EUROPÄISCHE PATENTSCHRIFT

(11) **EP 3 589 231 B1**
(45) Veröffentlichungstag und Bekanntmachung des Hinweises auf die Patenterteilung: **09.06.2021**
(21) Anmeldenummer: 18716883.6
(22) Anmeldetag: 20.02.2018
(51) Int. Cl.: A61C 9/00, H05G 1/02

(54) **SCANOBJEKTTRÄGER**
SCANNING OBJECT CARRIER
SUPPORT D'OBJET À SCANNER

(30) Priorität: 28.02.2017 AT 4517 U
(43) Veröffentlichungstag der Anmeldung: 08.01.2020
(73) Patentinhaber: Amann Girrbach AG, 6842 Koblach (AT)
(72) Erfinder: ANDERS, Johannes, 6800 Feldkirch (AT); HUMML, Marcel, 6844 Altach (AT); AMANN, Jürgen, 6842 Koblach (AT)
(74) Vertreter: Fechner, Thomas
(86) Internationale Anmeldenummer: PCT/AT2018/000006
(87) Internationale Veröffentlichungsnummer: WO 2018/157182

(56) Entgegenhaltungen:
- KR-A-020130 013 583
- US-A- 4 885 761

## Beschreibung

Die vorliegende Erfindung betrifft einen Scanobjektträger, vorgesehen für die Montage an einer Scanner-Wippe einer Scanvorrichtung zum Scannen zumindest eines, insbesondere dentalen, Objektes, wobei der Scanobjektträger einen Grundkörper und zumindest eine Befestigungseinrichtung zur Befestigung des Grundkörpers an der Scanner-Wippe und zumindest eine Objektfixierungseinrichtung zur Fixierung des Objektes am Scanobjektträger aufweist, wobei die Objektfixierungseinrichtung relativ zum Grundkörper verschwenkbar am Grundkörper gelagert ist. Darüber hinaus betrifft die Erfindung auch eine Anordnung mit einer Scanvorrichtung zum Scannen von zumindest einem, insbesondere dentalen, Objekt und mit einem Scanobjektträger. Weiters betrifft die Erfindung auch ein Verfahren zum Scannen zumindest eines, insbesondere dentalen, Objektes.

Insbesondere im Dentalbereich stellt sich häufig die Aufgabe, dass Objekte wie Gebissabdrücke, also Negativformen, oder Kiefer- und/oder Zahnmodelle von zwei verschiedenen, insbesondere einander gegenüberliegenden, Seiten aus eingescannt werden müssen. Um dies realisieren zu können, ohne das zu scannende Objekt zwischen den Scanvorgängen ein- und ausbauen zu müssen, sind gattungsgemäße Scanobjektträger bekannt. Es wird in diesem Zusammenhang beispielhaft auf den mit der KR 1020130013583 A veröffentlichten Stand der Technik verwiesen. Die in dieser Schrift offenbarte Technologie sieht einen in den Scanobjektträger integrierten Antriebsmechanismus mit einem Getriebe und einem entsprechenden Aktuator vor, mit dem die Objektfixierungseinrichtung relativ zum Grundkörper verschwenkbar am Grundkörper gelagert ist. Um diesen Antriebsmechanismus betreiben zu können, müssen in der Scanner-Wippe und auch im Scanobjektträger zueinander passende Übertragungsmöglichkeiten für Steuerbefehle und eine Energieversorgung für den Antriebsmechanismus des Scanobjektträgers vorhanden sein. Dies hat zur Folge, dass in einer Scanvorrichtung nur mit entsprechend dazu passenden Anschlüssen versehene Scanobjektträger verwendet werden können.

Aufgabe der Erfindung ist es, einen gattungsgemäßen Scanobjektträger dahingehend zu vereinfachen, dass er möglichst universell, möglichst in verschiedenen Scanvorrichtungen eingesetzt und vergleichsweise einfach konstruiert werden kann.

Zur Lösung dieser Aufgabe sieht die Erfindung bei einem Scanobjektträger der oben genannten Art vor, dass die Objektfixierungseinrichtung zwischen zwei Endlagen frei der Schwerkraft folgend verschwenkbar am Grundkörper gelagert ist.

Es ist somit eine Grundidee der Erfindung, die beim Stand der Technik bekannten Antriebsmechanismen im Scanobjektträger vollständig wegzulassen. Bei erfindungsgemäßen Scanobjektträgern ist die Objektfixierungseinrichtung in der Art und Weise zwischen den beiden Endlagen frei schwenkbar gelagert, dass sie der Schwerkraft folgend durch ein entsprechendes Bewegen des Scanobjektträgers in der Scanvorrichtung in die jeweils benötigte Endlage verschwenkt werden kann. Hierdurch wird den Scanobjektträger selbst gar kein Antriebsmechanismus mehr benötigt, sodass auch keine Übertragung von Steuerbefehlen auf den Scanobjektträger und auch keine Energieversorgung des Scanobjektträgers notwendig ist. Dadurch wird erreicht, dass erfindungsgemäße Scanobjektträger in verschiedensten Scanvorrichtungen an der dort jeweils vorhandenen Scanner-Wippe montiert werden können.

Bei einer erfindungsgemäßen Anordnung mit einer Scanvorrichtung zum Scannen von zumindest einem, insbesondere dentalen, Objekt und mit einem Scanobjektträger, welcher an einer Scanner-Wippe der Scanvorrichtung montiert ist, ist dann der Scanobjektträger erfindungsgemäß ausgebildet. Günstig ist es in solchen Anordnungen, wenn die Scanner-Wippe um eine Wippenschwenkachse der Scanvorrichtung schwenkbar ist und die Objektfixierungseinrichtung um eine Objektträgerschwenkachse schwenkbar am Grundkörper des Scanobjektträgers gehalten ist, wobei die Wippenschwenkachse und die Objektträgerschwenkachse koaxial zueinander ausgerichtet oder zumindest ausrichtbar sind.

Ein erfindungsgemäßes Verfahren zum Scannen zumindest eines, insbesondere dentalen, Objektes sieht vor, dass das Objekt an einer Objektfixierungseinrichtung eines erfindungsgemäßen Scanobjektträgers und der Grundkörper des Scanobjektträgers mit seiner Befestigungseinrichtung an einer Scanner-Wippe einer Scanvorrichtung fixiert werden und anschließend eine erste Seite des Objektes in einem ersten Scanvorgang gescannt wird, wobei sich die Objektfixierungseinrichtung bei dem ersten Scanvorgang in einer ersten ihrer Endlagen befindet und anschließend die Objektfixierungseinrichtung mit dem daran fixierten Objekt ausschließlich durch Schwenken der Scanner-Wippe und durch Einwirken der Schwerkraft in die zweite ihrer Endlagen geschwenkt wird und anschließend eine zweite Seite des Objektes in einem zweiten Scanvorgang gescannt wird, wobei sich die Objektfixierungseinrichtung bei dem zweiten Scanvorgang in der zweiten ihrer Endlagen befindet. Hierbei ist es egal, ob zuerst der Scanobjektträger an der Scanner-Wippe oder der zuerst das zu scannende Objekt an der Objektfixierungseinrichtung fixiert wird. Die erste Endlage für den ersten Scanvorgang kann nach der Montage ebenfalls durch entsprechendes Schwenken der Scanner-Wippe eingestellt werden.

Bevorzugt ist bei solchen Verfahren vorgesehen, dass der erste Scanvorgang und der zweite Scanvorgang mit demselben Scannerkopf der Scanvorrichtung durchgeführt werden. Der Scannerkopf der Scanvorrichtung ist dabei der Detektor der den eigentlichen Scanvorgang also Vermessungs- bzw. Abbildungsvorgang durchführt. Das Scannen könnte auch als Vermessen oder als Abbilden oder als Abtasten bezeichnet werden. Es gibt beim Stand der Technik verschiedenste Scanvorrichtungen, mit denen die Kontur eines Objektes aufgenommen bzw. vermessen werden kann. Der Scannerkopf ist in bevorzugten Ausgestaltungsformen ortsfest in der Scanvorrichtung angeordnet.

Um die zu scannenden Objekte von einander gegenüberliegenden Seiten abbilden zu können, sehen bevorzugte Varianten des erfindungsgemäßen Verfahrens vor, dassdie erste Seite des Objektes und die zweite Seite des Objektes einander gegenüberliegende Seiten des Objektes sind.

Der Begriff der Fixierung wird hier so verstanden, dass im fixierten oder anderen Worten verbundenen Zustand eine fixe, vorzugsweise starre, Verbindung zwischen den beiden aneinander fixierten Bauteilen besteht. Dies schließt aber natürlich nicht aus, dass es sich dabei um eine lösbare Verbindung handeln kann, welche unter Verwendung eines Werkzeugs oder nur von Hand oder in anderer Art und Weise wieder gelöst und bei Bedarf anschließend auch wieder miteinander verbunden werden kann.

Die Befestigungseinrichtung des Scanobjektträgers bzw. seines Grundkörpers dient dazu, den Scanobjektträger für den Scanvorgang an der Scanner-Wippe zu befestigen. Die Befestigungseinrichtung kann dabei sehr unterschiedlich ausgestaltet sein. Es kann sich z.B. um eine Klemmvorrichtung, eine Schraubverbindung, eine reib- und/oder formschlüssige Verbindung oder dergleichen handeln. Die Befestigungseinrichtung kann dabei eine Form und Ausgestaltung haben, mit der sie eine Befestigung des Scanobjektträgers bzw. dessen Grundkörpers an nahezu jeder Scanner-Wippe erlaubt. Es kann aber genauso gut vorgesehen sein, dass die Befestigungseinrichtung und die Scanner-Wippe eine Art Indizierung aufweisen, welche sicherstellt, dass der Grundkörper mit der Befestigungseinrichtung in einer einzigen, vorab definierten Stellung an der Scanner-Wippe befestigt werden kann.

Auch die Objektfixierungseinrichtung zur Fixierung des zu scannenden Objektes am Scanobjektträger kann sehr unterschiedlich ausgestaltet sein. Es kann sich auch hier z.B. um eine Klemm-, Schraub- oder in anderer Art und Weise form- oder reibschlüssige Verbindung handeln. Auch hier kann eine entsprechende Formgestaltung gewählt werden, so dass das zu scannende Objekt eindeutig in nur einer, nämlich der vorgesehenen Position an der Objektfixierungseinrichtung und damit am Scanobjektträger für den Scanvorgang fixiert werden kann. Natürlich sind bei der Objektfixierungseinrichtung andererseits auch Ausgestaltungen denkbar, die möglichst flexibel zur Fixierung verschiedenster zu scannender Objekte am Scanobjektträger ausgebildet sind.

Bei den zu scannenden Objekten handelt es sich bevorzugt um dentale Objekte wie zum Beispiel die eingangs erwähnten Gebiss- bzw. Zahnabdrücke, also Negativformen, oder um Kiefer- und/oder Zahnmodelle, also Positivformen. Die Erfindung kann natürlich aber auch zum Einscannen von anderen nicht dentalen Objekten genutzt werden. Besonders bevorzugt kommt die Erfindung zum Einsatz, wenn das Objekt von zwei verschiedenen, insbesondere einander gegenüberliegenden, Seiten eingescannt werden muss.

Um die Endlagen, zwischen denen die Objektfixierungseinrichtung frei der Schwerkraft folgend verschwenkbar am Grundkörper gelagert ist, zu definieren und vorzugeben, sehen bevorzugte Varianten der Erfindung vor, dass der Grundkörper zwei Endanschläge zur Begrenzung der Schwenkbewegung der Objektfixierungseinrichtung in den Endlagen aufweist. Günstigerweise ist also für jede Endlage ein Endanschlag vorgesehen.

Der Begriff der Verschwenkung bzw. der Verschwenkbarkeit ist weit auszulegen. Man könnte auch von einem Kippen sprechen. Allgemein folgt die Objektfixierungseinrichtung beim Verschwenken einer insgesamt gekrümmten Bahn, welche aber grundsätzlich auch gerade Abschnitte aufweisen könnte. Besonders bevorzugt ist vorgesehen, dass die Objektfixierungseinrichtung entlang eines Abschnitts einer Kreisbahn zwischen den Endlagen verschwenkbar am Grundkörper gelagert ist.

Zur Realisierung der Verschwenkbarkeit der Objektfixierungseinrichtung relativ zum Grundkörper des Scanobjektträgers sind verschiedene Ausgestaltungsformen denkbar. Z.B. wäre es möglich, dass der Grundkörper eine entsprechend gekrümmte Schiene, Kulissenbahn oder dergleichen aufweist, entlang der die Objektfixierungseinrichtung zur Ausführung der Verschwenkbewegung bewegbar ist. Besonders bevorzugte Varianten der Erfindung sehen aber vor, dass die Objektfixierungseinrichtung an einem Schwenkarm des Scanobjektträgers fixiert ist und der Schwenkarm um eine Objektträgerschwenkachse verschwenkbar am Grundkörper gehalten ist.

Um das Verschwenken der Objektfixierungseinrichtung zwischen den Endlagen unter Einwirkung der Schwerkraft zu unterstützen, sehen bevorzugte Varianten der Erfindung mit einem Schwenkarm vor, dass die Objektfixierungseinrichtung distanziert von der Objektträgerschwenkachse am Schwenkarm fixiert ist und ein Gegengewicht am Schwenkarm auf einer, bezüglich der Objektträgerschwenkachse gesehen, der Objektfixierungseinrichtung gegenüberliegenden Seite des Schwenkarms angeordnet ist. In anderen Worten befindet sich bei diesen Varianten auf der, der Objektfixierungseinrichtung bezüglich der Objektträgerschwenkachse gegenüberliegenden Seite ein Gegengewicht am Schwenkarm. Durch entsprechende Wahl der Abstände von der Objektträgerschwenkachse und der Massen der Objektfixierungseinrichtung samt zu scannendem Objekt einerseits und des Gegengewichts andererseits können die einander entgegenwirkenden Drehmomente so eingestellt werden, dass die Schwerkraft bei einem entsprechenden Schwenken des Grundkörpers des Scanobjektträgers für ein entsprechendes Umschwenken der Objektfixierungseinrichtung samt zu scannendem Objekt in die jeweils gewünschte andere Endlage sorgt. Alternativ ist es auch möglich, die Objektfixierungseinrichtung auf der Objektträgerschwenkachse anzuordnen. In diesen Fällen ist dann bevorzugt vorgesehen, ein Gegengewicht exzentrisch bezüglich und/oder entfernt von der Objektträgerschwenkachse anzuordnen. Das Gegengewicht und die Objektfixierungseinrichtung sind dann günstigerweise, z.B. über einen Schwenkarm, miteinander verbunden und gemeinsam um die Objektträgerschwenkachse schwenkbar am Grundkörper gelagert. Letztendlich sollte der Schwerpunkt der Gesamtheit der schwenkbar am Grundkörper gelagerten Massen exzentrisch zur Objektträgerschwenkachse sein, also in anderen Worten nicht auf der Objektträgerschwenkachse liegen.

Der Schwenkwinkel, um den die Objektfixierungseinrichtung zwischen den Endlagen verschwenkbar am Grundkörper gelagert ist, ist günstigerweise ein Winkel im Bereich von 75° bis 105°, vorzugsweise von 85° bis 95°. Besonders bevorzugt beträgt dieser Schwenkwinkel zwischen den Endlagen 90°.

Weitere Merkmale und Einzelheiten bevorzugter Varianten der Erfindung werden nachfolgend anhand der beiliegenden Figuren erläutert. Es zeigen:
Fig. 1 und 2 eine stark schematisierte Darstellung einer beim Stand der Technik an sich bekannten Scanvorrichtung;
Fig. 3 bis 5 schematisierte Darstellungen eines Ausführungsbeispiels eines erfindungsgemäßen Scanobjektträgers;
Fig. 6 eine schematisierte Seitenansicht einer Anordnung mit einer Scanvorrichtung gemäß der Fig. 1 und 2 und mit einem Scanobjektträgers gemäß der Fig. 3 bis 5; und
Fig. 7 und 8 die beiden Endlagen, in denen der Scanvorgang mit der Anordnung gemäß Fig. 6 durchgeführt wird, jeweils in einer Ansicht in Richtung parallel zur Objektträgerschwenkachse.

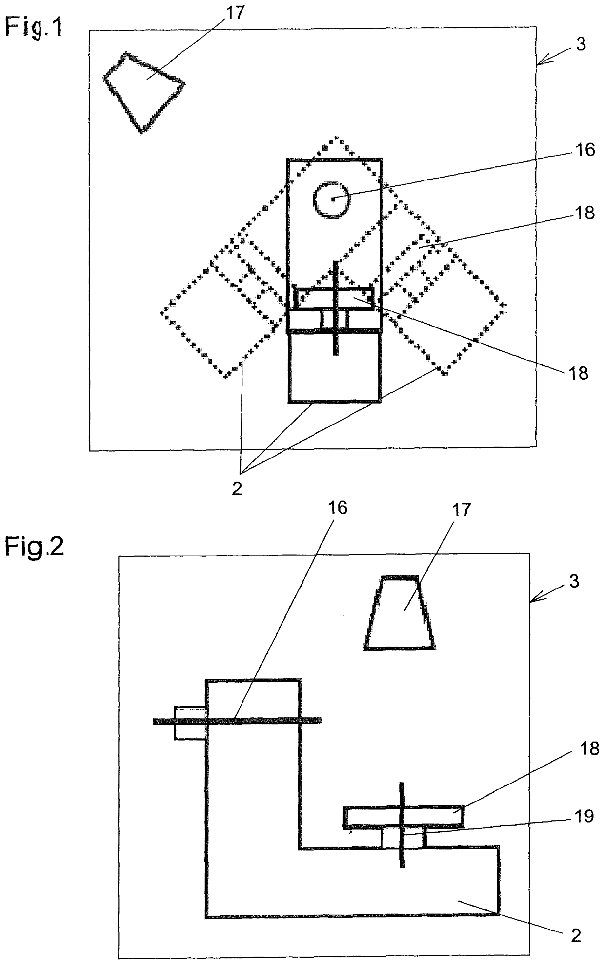

Die Fig. 1 und 2 zeigen stark schematisiert eine beim Stand der Technik an sich bekannte Scanvorrichtung 3 zum Scannen eines, insbesondere dentalen, Objektes 20. In einem gegebenenfalls vorhandenen, hier nur kastenartig dargestellten Gehäuse befindet sich bei solchen Scanvorrichtungen 3 in der Regel ein Hohlraum in dem eine Scanner-Wippe 2 um ihre Wippenschwenkachse 16 schwenkbar gelagert ist. Der hierzu zum Verschwenken benötigte Antrieb ist hier nicht gesondert dargestellt. Für den eigentlichen Scanvorgang ist zumindest ein Scannerkopf 17 vorgesehen. Dies ist der Detektor der das zu scannende Objekt 20 abscannt oder in anderen Worten abtastet oder vermisst. Das in den Fig. 1 und 2 nicht dargestellte, zu scannende Objekt 20 kann beim Stand der Technik entweder direkt auf dem Teller 18 oder eben erfindungsgemäß mit einem weiter unten noch erläuterten erfindungsgemäßen Scanobjektträger 1 auf der Scanner-Wippe 2 gelagert sein. In Fig. 1 ist eine Ansicht aus Richtung parallel zur Wippenschwenkachse 16 gezeigt.

Dargestellt ist die Scanner-Wippe 2 in Fig. 1 in einer durchgezogen gezeichneten, vertikal nach unten hängenden Stellung sowie in zwei punktiert dargestellten, dazu verschwenkten Stellungen. Fig. 2 zeigt eine Seitenansicht aus einer Richtung orthogonal zur Wippenschwenkachse 16. In der gezeigten Variante ist der Teller 18 um eine Drehachse 19 drehbar an der Scanner-Wippe 2 gelagert. Letzteres muss aber nicht zwingend so sein. Öffnungen zum Einführen des zu scannenden Objektes 20 in das gegebenenfalls vorhandene Gehäuse der Scanvorrichtung 3 und dergleichen sind hier in dieser stark vereinfachten schematischen Darstellung weggelassen, können aber, wie auch andere an sich bekannte Merkmale entsprechender Scanvorrichtung 3, wie beim Stand der Technik ausgebildet sein.

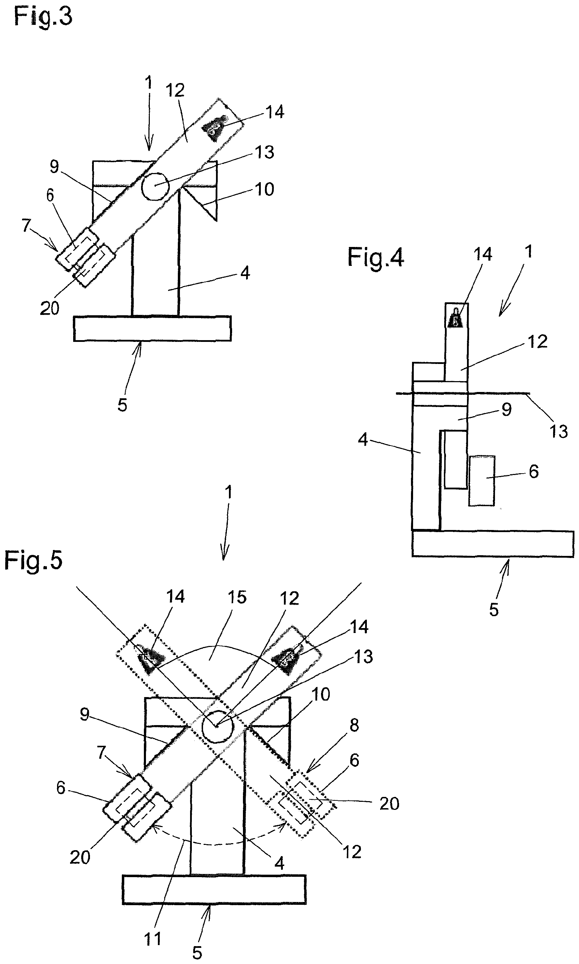

In den Fig. 3, 4 und 5 ist nun beispielhaft ein schematisiert dargestellter, erfindungsgemäß ausgebildeter Scanobjektträger 1 gezeigt. Fig. 3 zeigt eine Ansicht aus Richtung parallel zur Objektträgerschwenkachse 13. Fig. 4 zeigt eine Seitenansicht aus einer Richtung orthogonal zur Objektträgerschwenkachse 13. Fig. 5 zeigt eine Ansicht wie Fig. 3, wobei hier allerdings beide Endlagen der Objektfixierungseinrichtung 6 dargestellt sind. Der Scanobjektträger 1 dieses Ausführungsbeispiels weist einen Grundkörper 4, eine Befestigungseinrichtung 5 und eine Objektfixierungseinrichtung 6 auf. Die Befestigungseinrichtung 5 dient der Befestigung des Scanobjektträgers 1 am Teller 18 und damit an der Scanner-Wippe 2. Die Befestigungseinrichtung 5 kann hierzu, wie eingangs bereits erläutert, sehr unterschiedlich ausgestaltet sein.

Die Objektfixierungseinrichtung 6 dient zur Fixierung des zu scannenden Objektes 20 am Scanobjektträger 1. Auch sie kann sehr unterschiedlich in den eingangs bereits erläuterten Arten und Weisen ausgebildet sein.

Die Objektfixierungseinrichtung 6 ist relativ zum Grundkörper 4 zwischen den Endlagen 7 und 8 verschwenkbar gelagert. Im hier gezeigten, bevorzugten Ausgestaltungsbeispiel weist der Grundkörper 4 zwei Endanschläge 9 und 10 auf, welche die Schwenkbewegung der Objektfixierungseinrichtung 6 in den Endlagen 7 und 8 begrenzt. Im gezeigten Ausführungsbeispiel erfolgt dies durch Anlage des Schwenkarms 12 an einem der beiden Endanschläge 9 oder 10. In Fig. 5 ist die erste der Endlagen 7 durchgezogen und die zweite der Endlagen 8 gestrichelt dargestellt.

Im gezeigten Ausführungsbeispiel wird die Verschwenkbarkeit der Objektfixierungseinrichtung 6 und damit auch des zu scannenden Objektes 20 relativ zum Grundkörper 4 des Scanobjektträgers 1 mittels eines Schwenkarms 12 realisiert. An diesem Schwenkarm 12 ist die Objektfixierungseinrichtung 6 fixiert. Der Schwenkarm 12 ist um die Objektträgerschwenkachse 13 verschwenkbar am Grundkörper 4 gehalten. Die Objektfixierungseinrichtung 6 ist dabei distanziert von der Objektträgerschwenkachse 13 am Schwenkarm 12 fixiert. Auf der dazu gegenüberliegenden Seite ist am Schwenkarm 12 ein Gegengewicht 14 angeordnet. Die Objektfixierungseinrichtung 6 und das Gegengewicht 14 befinden sich bezüglich der Objektträgerschwenkachse 3 auf einander gegenüberliegenden Seiten des Schwenkarms 12. Durch diese Anordnung wird in diesem Ausführungsbeispiel erreicht, dass die Objektfixierungseinrichtung 6 zusammen mit dem daran befestigten zu scannenden Objekt 20 entlang eines Abschnitts 11 einer Kreisbahn zwischen den Endlagen 7 und 8 verschwenkbar am Grundkörper 4 gelagert ist. Der Abschnitt 11 der Kreisbahn ist in Fig. 5 gestrichelt eingezeichnet.

Im hier gezeigten Ausführungsbeispiel beträgt der Schwenkwinkel 15, um den die Objektfixierungseinrichtung 6 zwischen ihren Endlagen 7 und 8 verschwenkbar am Grundkörper gelagert ist, 90°. Andere bevorzugte Bereiche des Schwenkwinkels 15 sind eingangs angegeben.

Erfindungsgemäß weist auch die hier als Ausführungsbeispiel gezeigte Ausgestaltungsform des Scanobjektträgers 1 keinen eigenen Antriebsmechanismus zum Verschwenken der Objektfixierungseinrichtung 6 relativ zum Grundkörper 4 auf. Es ist vielmehr erfindungsgemäß vorgesehen, dass die Objektfixierungseinrichtung 6 zwischen den Endlagen 7 und 8 frei der Schwerkraft folgend verschwenkbar am Grundkörper 4 gelagert ist.

Generell gesprochen kann das Umschwenken der Objektfixierungseinrichtung 6 relativ zum Grundkörper 4 mittels Schwerkraft dadurch hervorgerufen werden, dass der Scanobjektträger 1 als Ganzes geschwenkt wird. Dies wird bevorzugt durch ein Schwenken der Scanner-Wippe 2 samt darauf montiertem Scanobjektträger 1 herbeigeführt.

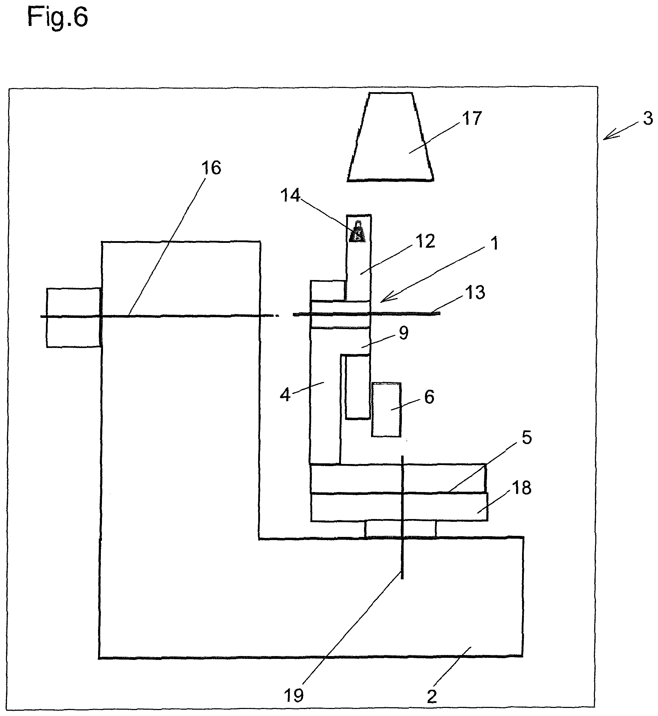

Um dies weiter zu erläutern, wird auf die Fig. 6 bis 8 verwiesen. Fig. 6 zeigt eine erfindungsgemäße Anordnung in einer schematisierten Seitenansicht aus Richtung orthogonal zur Objektträgerschwenkachse 13 und auch zur Wippenschwenkachse 16, bei der der erfindungsgemäße Scanobjektträger 1 mittels seiner Befestigungseinrichtung 5 an der Scanner-Wippe 2 der Scanvorrichtung 3 montiert ist. In Fig. 6 ist gut zu sehen, dass in bevorzugten Ausgestaltungsformen, wie der hier gezeigten, die Wippenschwenkachse 16 und die Objektträgerschwenkachse 13 koaxial angeordnet oder zumindest anordenbar sind.

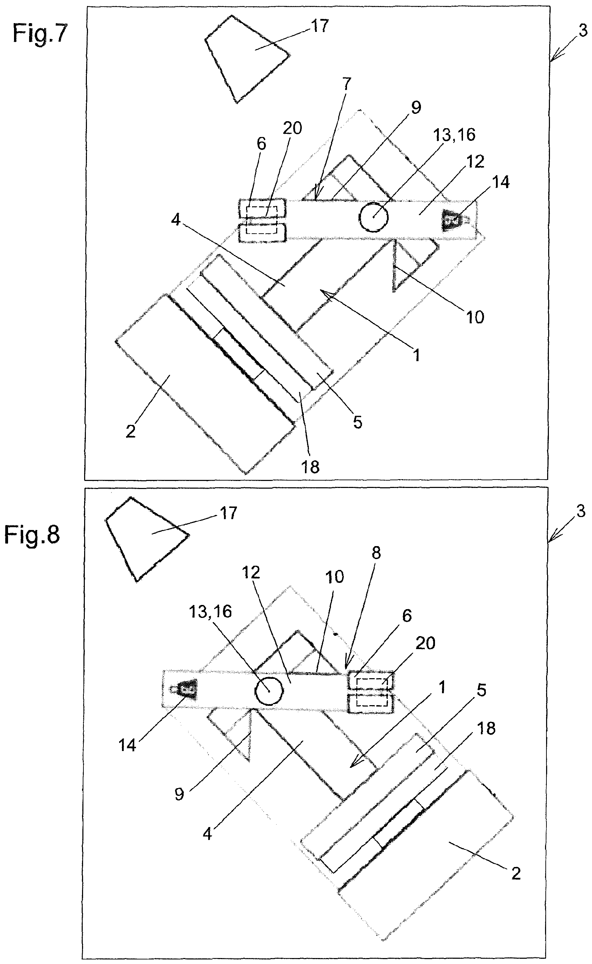

Die Fig. 7 und 8 zeigen die erfindungsgemäße Anordnung in den Endlagen der Objektfixierungseinrichtung 6, in denen einander gegenüberliegende Seiten des zu scannenden, an der Objektfixierungseinrichtung 6 fixierten Objektes 20 mittels des Scannerkopfes 17 eingescannt werden können. Die Fig. 7 und 8 zeigen jeweils Ansichten in Richtung parallel zur Objektträgerschwenkachse 13 und zur Wippenschwenkachse 16.

In Fig. 7 befindet sich die Objektfixierungseinrichtung 6 in der ersten ihrer Endlagen 7 in dem die Objektfixierungseinrichtung 6 bzw. hier der Schwenkarm 12 am Endanschlag 9 anliegen. Diese Endlage 7 kann durch entsprechendes Verschwenken der Scanner-Wippe 2 samt Scanobjektträger 1 um die Wippenschwenkachse 16 herbeigeführt werden. Dabei sorgt die an der Objektfixierungseinrichtung 6 und dem Objekt 20 einerseits und am Gegengewicht 14 andererseits angreifende Schwerkraft für ein entsprechend freies Verschwenken in die in Fig. 7 dargestellte Endlage 7. In dieser wird nun beim erfindungsgemäßen Verfahren ein erster Scanvorgang mittels des Scannerkopfes 7 durchgeführt. Anschließend wird die Objektfixierungseinrichtung 6 mit dem daran fixierten Objekt 20 ausschließlich durch Schwenken der Scanner-Wippe 2 und durch entsprechendes Einwirken der Schwerkraft in die zweite ihrer Endlagen 8 geschwenkt. Diese hierdurch hervorgerufene Stellung in der sich die Objektfixierungseinrichtung 6 in der zweiten ihrer Endlagen 8 befindet, ist in Fig. 8 dargestellt. Ist diese Stellung gemäß Fig. 8 erreicht, so kann die zweite Seite des Objektes 20 in einem zweiten Scanvorgang mittels des Scannerkopfes 17 eingescannt werden.

Der Vergleich der Fig. 7 und 8 zeigt beispielhaft, dass durch die erfindungsgemäße freie Verschwenkbarkeit der Objektfixierungseinrichtung 6 relativ zum Grundkörper 4 des Scanobjektträgers 1 auf einen eigenen Antriebsmechanismus im Scanobjektträger 1 vollständig verzichtet werden kann. Das Verschwenken der Objektfixierungseinrichtung 6 samt zu scannendem Objekt 20 erfolgt ausschließlich durch ein Verschwenken des gesamten Scanobjektträgers 1 mittels der Scanner-Wippe 2 und einem entsprechenden Einwirken der Schwerkraft. Die Schwerkraft sorgt dabei ab einem gewissen Schwenkwinkel der Scanner-Wippe 2 für ein Umschwenken der Objektfixierungseinrichtung 6 samt daran befestigtem Objekt 20 von einer ihrer Endlagen 7 bzw. 8 in die jeweils andere Endlage 7 bzw. 8.

### Legende zu den Hinweisziffern:

- 1: Scanobjektträger
- 2: Scanner-Wippe
- 3: Scanvorrichtung
- 4: Grundkörper
- 5: Befestigungseinrichtung
- 6: Objektfixierungseinrichtung
- 7: erste der Endlagen
- 8: zweite der Endlagen
- 9: Endanschlag
- 10: Endanschlag
- 11: Abschnitt einer Kreisbahn
- 12: Schwenkarm
- 13: Objektträgerschwenkachse
- 14: Gegengewicht
- 15: Schwenkwinkel
- 16: Wippenschwenkachse
- 17: Scannerkopf
- 18: Teller
- 19: Drehachse
- 20: Objekt

## Patentansprüche

1. Scanobjektträger (1), vorgesehen für die Montage an einer Scanner-Wippe (2) einer Scanvorrichtung (3) zum Scannen zumindest eines, insbesondere dentalen, Objektes (20), wobei der Scanobjektträger (1) einen Grundkörper (4) und zumindest eine Befestigungseinrichtung (5) zur Befestigung des Grundkörpers (4) an der Scanner-Wippe (2) und zumindest eine Objektfixierungseinrichtung (6) zur Fixierung des Objektes (20) am Scanobjektträger (1) aufweist, wobei die Objektfixierungseinrichtung (6) relativ zum Grundkörper (4) verschwenkbar am Grundkörper (4) gelagert ist, **dadurch gekennzeichnet, dass** die Objektfixierungseinrichtung (6) zwischen zwei Endlagen (7, 8) frei der Schwerkraft folgend verschwenkbar am Grundkörper (4) gelagert ist.

2. Scanobjektträger (1) nach Anspruch 1, **dadurch gekennzeichnet, dass** der Grundkörper (4) zwei Endanschläge (9, 10) zur Begrenzung der Schwenkbewegung der Objektfixierungseinrichtung (6) in den Endlagen (7, 8) aufweist.

3. Scanobjektträger (1) nach Anspruch 1 oder 2, **dadurch gekennzeichnet, dass** die Objektfixierungseinrichtung (6) entlang eines Abschnitts (11) einer Kreisbahn zwischen den Endlagen (7, 8) verschwenkbar am Grundkörper (4) gelagert ist.

4. Scanobjektträger (1) nach einem der Ansprüche 1 bis 3, **dadurch gekennzeichnet, dass** die Objektfixierungseinrichtung (6) an einem Schwenkarm (12) des Scanobjektträgers (1) fixiert ist und der Schwenkarm (12) um eine Objektträgerschwenkachse (13) verschwenkbar am Grundkörper (4) gehalten ist.

5. Scanobjektträger (1) nach Anspruch 4, **dadurch gekennzeichnet, dass** die Objektfixierungseinrichtung (6) distanziert von der Objektträgerschwenkachse (13) am Schwenkarm (12) fixiert ist und ein Gegengewicht (14) am Schwenkarm (12) auf einer, bezüglich der Objektträgerschwenkachse (13) gesehen, der Objektfixierungseinrichtung (6) gegenüberliegenden Seite des Schwenkarms (12) angeordnet ist.

6. Scanobjektträger (1) nach einem der Ansprüche 1 bis 5, **dadurch gekennzeichnet, dass** die Objektfixierungseinrichtung (6) zwischen den Endlagen (7, 8) um einen Schwenkwinkel (15) verschwenkbar am Grundkörper (4) gelagert ist und der Schwenkwinkel (15) ein Winkel im Bereich von 75° bis 105°, vorzugsweise von 85° bis 95°, ist.

7. Anordnung mit einer Scanvorrichtung (3) zum Scannen von zumindest einem, insbesondere dentalen, Objekt (20) und mit einem Scanobjektträger (1), welcher an einer Scanner-Wippe (2) der Scanvorrichtung (3) montiert ist, **dadurch gekennzeichnet, dass** der Scanobjektträger (1) ein Scanobjektträger (1) nach einem der Ansprüche 1 bis 6 ist.

8. Anordnung nach Anspruch 7, **dadurch gekennzeichnet, dass** die Scanner-Wippe (2) um eine Wippenschwenkachse (16) der Scanvorrichtung (3) schwenkbar ist und die Objektfixierungseinrichtung (6) um eine Objektträgerschwenkachse (13) schwenkbar am Grundkörper (4) des Scanobjektträgers (1) gehalten ist, wobei die Wippenschwenkachse (16) und die Objektträgerschwenkachse (13) koaxial zueinander ausgerichtet oder zumindest ausrichtbar sind.

9. Verfahren zum Scannen zumindest eines, insbesondere dentalen, Objektes (20), wobei das Objekt (20) an einer Objektfixierungseinrichtung (6) eines Scanobjektträgers (1) nach einem der Ansprüche 1 bis 6 und der Grundkörper (4) des Scanobjektträgers (1) mit seiner Befestigungseinrichtung (5) an einer Scanner-Wippe (2) einer Scanvorrichtung (3) fixiert werden und anschließend eine erste Seite des Objektes (20) in einem ersten Scanvorgang gescannt wird, wobei sich die Objektfixierungseinrichtung (6) bei dem ersten Scanvorgang in einer ersten ihrer Endlagen (7) befindet und anschließend die Objektfixierungseinrichtung (6) mit dem daran fixierten Objekt (20) ausschließlich durch Schwenken der Scanner-Wippe (2) und durch Einwirken der Schwerkraft in die zweite ihrer Endlagen (8) geschwenkt wird und anschließend eine zweite Seite des Objektes (20) in einem zweiten Scanvorgang gescannt wird, wobei sich die Objektfixierungseinrichtung (6) bei dem zweiten Scanvorgang in der zweiten ihrer Endlagen (8) befindet.

10. Verfahren nach Anspruch 9, **dadurch gekennzeichnet, dass** der erste Scanvorgang und der zweite Scanvorgang mit demselben, vorzugsweise in der Scanvorrichtung (3) ortsfest angeordneten, Scannerkopf (17) der Scanvorrichtung (3) durchgeführt werden und/oder dass die erste Seite des Objektes (20) und die zweite Seite des Objektes (20) einander gegenüberliegende Seiten des Objektes (20) sind.

## Claims

1. A carrier (1) for an object to be scanned, which carrier is provided for mounting on a scanner rocker (2) of a scanning device (3) for scanning at least one object (20), in particular a dental object, wherein the carrier (1) for an object to be scanned has a basic body (4) and at least one securing arrangement (5) for securing the basic body (4) to the scanner rocker (2) and at least one object fixing arrangement (6) for fixing the object (20) to the carrier (1) for an object to be scanned, wherein the object fixing arrangement (6) is mounted on the basic body (4) in a manner pivotable relative to the basic body (4), **characterised in that** the object fixing arrangement (6) is mounted on the basic body (4) in a manner freely pivotable between two end positions (7, 8) due to gravity.

2. A carrier (1), for an object to be scanned, according to claim 1, **characterised in that** the basic body (4) has two end stops (9, 10) for limiting the pivot motion of the object fixing arrangement (6) in the end positions (7, 8).

3. A carrier (1), for an object to be scanned, according to claim 1 or 2, **characterised in that** the object fixing arrangement (6) is mounted on the basic body (4) in a manner pivotable between the end positions (7, 8), along a portion (11) of a circular path.

4. A carrier (1), for an object to be scanned, according to any one of claims 1 to 3, **characterised in that** the object fixing arrangement (6) is fixed on a pivot arm (12) of the carrier (1) for an object to be scanned and the pivot arm (12) is held on the basic body (4) in a manner pivotable about an object carrier pivot axis (13).

5. A carrier (1), for an object to be scanned, according to claim 4, **characterised in that** the object fixing arrangement (6) is fixed on the pivot arm (12) in a manner distanced from the object carrier pivot axis (13) and a counterweight (14) is arranged on the pivot arm (12), on a pivot-arm side opposite the object fixing arrangement (6) when viewed with regard to the object carrier pivot axis (13).

6. A carrier (1), for an object to be scanned, according to any one of claims 1 to 5, **characterised in that** the object fixing arrangement (6) is mounted on the basic body (4) in a manner pivotable between the end positions (7, 8) about a pivot angle (15) and the pivot angle (15) is an angle in the range from 75°to 105°, preferably from 85°to 95°.

7. An arrangement having a scanning device (3) for scanning at least one object (20), in particular a dental object, and having a carrier (1) for an object to be scanned, which carrier is mounted on a scanner rocker (2) of the scanning device (3), **characterised in that** the carrier (1) for an object to be scanned is a carrier (1), for an object to be scanned, according to any one of claims 1 to 6.

8. An arrangement according to claim 7, **characterised in that** the scanner rocker (2) is pivotable about a rocker pivot axis (16) of the scanning device (3) and the object fixing arrangement (6) is held on the basic body (4) of the carrier (1) for an object to be scanned in a manner pivotable about an object carrier pivot axis (13), wherein the rocker pivot axis (16) and the object carrier pivot axis (13) are oriented coaxially with one another or at least are orientable coaxially with one another.

9. A method of scanning at least one object (20), in particular a dental object, wherein the object (20) is fixed on an object fixing arrangement (6) of a carrier (1), for an object to be scanned, according to any one of claims 1 to 6 and the basic body (4) of the carrier (1) for an object to be scanned is fixed on a scanner rocker (2) of a scanning device (3) by means of its securing arrangement (5) and then a first side of the object (20) is scanned in a first scanning procedure, wherein the object fixing arrangement (6) is located in a first of its end positions (7) during the first scanning procedure, and then the object fixing arrangement (6) with the object (20) fixed thereon is pivoted into the second of its end positions (8) solely by pivoting of the scanner rocker (2) and by the action of gravity and then a second side of the object (20) is scanned in a second scanning procedure, wherein the object fixing arrangement (6) is located in the second of its end positions (8) during the second scanning procedure.

10. A method according to claim 9, **characterised in that** the first scanning procedure and the second scanning procedure are carried out using the same scanner head (17), preferably fixedly arranged in the scanning device (3), of the scanning device (3) and/or **in that** the first side of the object (20) and the second side of the object (20) are sides of the object (20) which are opposite one another.

## Revendications

1. Porte-objet de scannage (1), prévu pour être monté sur une bascule de scannage (2) d'un dispositif de scannage (3) pour scanner au moins un objet (20), en particulier un objet dentaire, le porte-objet de scannage (1) étant muni d'un corps de base (4) et d'au moins un dispositif de fixation (5) pour fixer le corps de base (4) sur la bascule de scannage (2) et d'au moins un dispositif de fixation d'objet (6) pour fixer l'objet (20) sur le porte-objet de scannage (1), le dispositif de fixation d'objet (6) étant logé sur le corps de base (4) de manière à pouvoir pivoter par rapport au corps de base (4), **caractérisé en ce que** le dispositif de fixation d'objet (6) est logé sur le corps de base (4) de manière à pouvoir pivoter librement entre deux positions extrêmes (7, 8) sous l'effet de la force de gravité.

2. Porte-objet de scannage (1) selon la revendication 1, **caractérisé en ce que** le corps de base (4) est muni de deux butées d'extrémité (9, 10) pour limiter le mouvement de pivotement du dispositif de fixation d'objet (6) dans les positions d'extrémité (7, 8).

3. Porte-objet de scannage (1) selon la revendication 1 ou 2, **caractérisé en ce que** le dispositif de fixation d'objet (6) est logé sur le corps de base (4) de manière à pouvoir pivoter le long d'un tronçon (11) d'une trajectoire circulaire entre les positions extrêmes (7, 8).

4. Porte-objet de scannage (1) selon l'une des revendications 1 à 3, **caractérisé en ce que** le dispositif de fixation d'objet (6) est fixé à un bras pivotant (12) du porte-objet de scannage (1), et le bras pivotant (12) est maintenu sur le corps de base (4) de manière à pouvoir pivoter autour d'un axe de pivotement de porte-objet (13).

5. Porte-objet de scannage (1) selon la revendication 4, **caractérisé en ce que** le dispositif de fixation d'objet (6) est fixé au bras pivotant (12) à distance de l'axe de pivotement de porte-objet (13), et un contrepoids (14) est disposé sur le bras pivotant (12) sur un côté du bras pivotant (12) opposé, considéré par rapport à l'axe de pivotement de porte-objet (13), au dispositif de fixation d'objet (6).

6. Porte-objet de scannage (1) selon l'une des revendications 1 à 5, **caractérisé en ce que** le dispositif de fixation d'objet (6) est logé sur le corps de base (4) de manière à pouvoir pivoter d'un angle de pivotement (15) entre les positions extrêmes (7, 8), et l'angle de pivotement (15) est un angle dans la plage allant de 75° à 105°, de préférence de 85° à 95°.

7. Agencement avec un dispositif de scannage (3) pour scanner au moins un objet (20), en particulier un objet dentaire, et avec un porte-objet de scannage (1) monté sur une bascule de scannage (2) du dispositif de scannage (3), **caractérisé en ce que** le porte-objet de scannage (1) est un porte-objet de scannage (1) selon l'une des revendications 1 à 6.

8. Agencement selon la revendication 7, **caractérisé en ce que** la bascule de scannage (2) peut pivoter autour d'un axe de pivotement de bascule (16) du dispositif de scannage (3), et le dispositif de fixation d'objet (6) est maintenu sur le corps de base (4) du porte-objet de scannage (1) de manière à pouvoir pivoter autour d'un axe de pivotement de porte-objet (13), l'axe de pivotement de bascule (16) et l'axe de pivotement de porte-objet (13) étant alignés, ou au moins pouvant être alignés, de façon coaxiale l'un par rapport à l'autre.

9. Procédé de scannage d'au moins un objet (20), en particulier un objet dentaire, dans lequel l'objet (20) est fixé à un dispositif de fixation d'objet (6) d'un porte-objet de scannage (1) selon l'une des revendications 1 à 6, et le corps de base (4) du porte-objet de scannage (1) est fixé avec son dispositif de fixation (5) sur une bascule de scannage (2) d'un dispositif de scannage (3), et ensuite un premier côté de l'objet (20) est scanné dans une première opération de scannage, le dispositif de fixation d'objet (6) se trouvant dans une première de ses positions extrêmes (7) pendant la première opération de scannage, et ensuite le dispositif de fixation d'objet (6) avec l'objet (20) fixé dessus est pivoté dans la deuxième de ses positions extrêmes (8) exclusivement par le pivotement de la bascule de scannage (2) et par l'effet de la gravité, et ensuite un deuxième côté de l'objet (20) est scanné dans une deuxième opération de scannage, le dispositif de fixation d'objet (6) se trouvant dans la deuxième de ses positions extrêmes (8) pendant la deuxième opération de scannage.

10. Procédé selon la revendication 9, **caractérisé en ce que** la première opération de scannage et la deuxième opération de scannage sont effectuées avec la même tête de scannage (17) du dispositif de scannage (3), qui est de préférence disposée de manière fixe dans le dispositif de scannage (3), et/ou **en ce que** le premier côté de l'objet (20) et le deuxième côté de l'objet {20) sont des côtés opposés de l'objet (20).
